# EUROPÄISCHE PATENTSCHRIFT

(11) **EP 1 034 985 B1**
(45) Veröffentlichungstag und Bekanntmachung des Hinweises auf die Patenterteilung: **15.09.2004**
(21) Anmeldenummer: 00103447.9
(22) Anmeldetag: 28.02.2000
(51) Int. Cl.: B60R 21/01

(54) **Verfahren und Anordnung zur Auslösesteuerung von Rückhaltemitteln in einem Kraftfahrzeug**
Method and apparatus for controlling a passive restraint system of a vehicle
Méthode et dispositif de commande d'un système de retenue d' un véhicule

(30) Priorität: 10.03.1999 DE 19910596
(43) Veröffentlichungstag der Anmeldung: 13.09.2000
(73) Patentinhaber: Volkswagen Aktiengesellschaft, 38436 Wolfsburg (DE)
(72) Erfinder: Hackenberg, Ulrich, Dr., 85139 Wettstetten (DE)
(74) Vertreter: Effert, Bressel und Kollegen

(56) Entgegenhaltungen:
- EP-A- 0 747 272
- DE-A- 4 212 337
- DE-A- 19 736 328
- DE-A- 19 736 840
- DE-A- 19 811 865
- US-A- 5 261 506

## Beschreibung

Die Erfindung betrifft ein Verfahren zur Auslösesteuerung von Rückhaltemitteln für Fahrzeuginsassen in einem Kraftfahrzeug, wobei das Verfahren vorsieht, Ist-Werte der Fahrzeugbewegung zu erfassen und einen Auslösealgorithmus auf die erfaßten Ist-Werte zum bedarfsweisen Erzeugen von Auslösesignalen für die Auslösung mindestens eines der Rückhaltemittel anzuwenden. Die Erfindung betrifft ebenso eine Anordnung zur Auslösesteuerung von Rückhaltemitteln für Fahrzeuginsassen in einem Kraftfahrzeug, die Sensoren zur Erfassung von Ist-Werten der Fahrzeugbewegung umfaßt, sowie eine Rückhaltemittelsteuereinheit, die geeignet ist, in Abhängigkeit der erfaßten Ist-Werte Auslösesignale zur Auslösung der Rückhaltemittel zu generieren und an die Rückhaltemittel auszugeben.

Solche Verfahren und Anordnungen sind aus der Praxis und aus einer Vielzahl von Druckschriften bekannt.

So beschreibt die DE 196 32 836 C1 eine Anordnung zum Auslösen von Rückhaltemitteln in einem Kraftfahrzeug, bei dem die Auslösesignale für ein oder mehrere ausgewählte Rückhaltemittel in Abhängigkeit von erfaßten Werten mehrerer Sensoren generiert werden. Zum einen werden Beschleunigungssensoren eingesetzt, die eine Erfassung der Beschleunigung in Längs- und Querrichtung erlauben. Zum anderen wird mindestens ein Drehbewegungssensor zum Erfassen von Drehungen um die Hochachse des Fahrzeugs eingesetzt. Anhand der Ausgabewerte des Drehbewegungssensors können zusätzlich zu Bewegungen in Längs- und Querrichtung auch Schleuderbewegungen erkannt werden, die zum Schutz der Fahrzeuginsassen zumindest einen Teil der Rückhaltemittel zum Auslösen bringen sollten, aber von den Beschleunigungssensoren aber nicht erfaßt werden.

Die DE 196 32 836 C1 sieht vor, daß eine individuelle Ansteuerung der eingesetzten Rückhaltemittel wie Gurtstraffer oder Airbags erfolgt, die je nach Richtung und Stärke eines Stoßes ausgelöst werden. In der DE 195 20 608 A1 und der DE 196 11 718 A1, die ebenfalls die Auslösung von Rückhaltemitteln in Abhängigkeit von erfaßten Ist-Werten der Fahrzeugbewegung zum Gegenstand haben, wird zudem vorgeschlagen, die einzelnen Rückhaltemittel stufenweise auszulösen, um einen noch differenzierteren Schutz zu ermöglichen. Die einzelnen Stufen werden dabei in der DE 195 20 608 A1 je nach von der erfaßten Längs- und Querbeschleunigung überschrittenen Grenzwerten angesteuert. In der DE 196 11 718 A1 erfolgt die Ansteuerung in Abhängigkeit von der Intensität eines Aufpralls, die ermittelt wird aus den Differenzen von erfaßten Geschwindigkeiten und den Zeiten, in denen vorgegebene Grenzwerte von Geschwindigkeiten überschritten werden.

Den bekannten Systemen ist gemein, daß die Stabilität des aktuellen Fahrzeugzustands unberücksichtigt bleibt, obwohl der Schutz der Fahrzeuginsassen durch Rückhaltemittel in fahrdynamisch kritischen Situationen in höherem Maße erforderlich ist, als dies in weniger kritischen Situationen der Fall ist.

Daneben ist es aus der DE 197 36 328 A1 bekannt, die Quer- oder Längsneigung eines Fahrzeugs zu ermitteln und eine Unfallschutz-Auslöseeinrichtung in Abhängigkeit des Querneigungswerts zu betätigen.

Ein situationsabhängiges Auslösen eines Rückhaltesystems ist auch aus der DE 197 36 840 A1 bekannt. Dabei werden verschiedene Sensorsignale erfaßt und miteinander verknüpft und ein Rückhaltesystem in Abhängigkeit des verknüpften Sensorsignals ausgelöst. Verwendete Sensoren sind ein Beschleunigungssensor, ABS-Sensoren, ein Abstandssensor und Parksensoren.

Aus der DE 42 12 337 A1 ist es bekannt, ein ABS/ASR und eine Rückhaltung in einem gemeinsamen Steuergerät auszubilden, das die S ensorsignale in zwei parallelen Kanälen redundant verarbeitet. Dabei wird ausgenutzt, daß die Rückhaltung und ein ABS/ASR teilweise gleiche Signale verwenden, die Stabilität des Fahrzeugzustands hat jedoch keine Rückwirkung auf die Auslöseeinrichtung.

Aus der US 5,261,506 ist ein Rückhaltesystem bekannt, welches aufgrund von zwei alternativ vorliegenden Zuständen ausgelöst wird, nämlich einem Überschreiten von Maximalbeschleunigungen in Längs- und/oder Querrichtung und einer Schwerelosigkeit im freien Fall des Fahrzeugs.

Aus der EP 0 747 272 A2 sind ein Verfahren und eine Vorrichtung zur Auslösesteuerung von Sicherheitseinrichtung in einem Kraftfahrzeug bekannt, wobei die Fahrdynamik eines Kraftfahrzeugs erfaßt wird, und die Sicherheitseinrichtungen in Abhängigkeit der erfaßten Fahrdynamik für mögliche Crash-Situationen sensibilisiert wird. Die EP 0 747 272 A2 zeigt die Merkmale des Oberbegriffs von Anspruch 7.

Aus der DE 197 51 336 A1 und der US-A 5,407,228 sind Vorrichtungen und Verfahren zur Auslösesteuerung von Fahrzeuginsassen-Sicherheitsvorrichtungen bekannt, wobei eine Auslösung erfolgt, wenn eine Verlangsamung eines Kraftfahrzeugs einen Schwellwert überschreitet.

Der Erfindung liegt die Aufgabe zugrunde, ein Verfahren und eine Anordnung zur Auslösesteuerung von Rückhaltemitteln für Fahrzeuginsassen in einem Kraftfahrzeug zur Verfügung zu stellen, die einen verbesserten Schutz von Fahrzeuginsassen gewährleisten.

Die Aufgabe wird zum einen gelöst durch ein Verfahren zur Auslösesteuerung von Rückhaltemitteln für Fahrzeuginsassen in einem Kraftfahrzeug,
das die folgenden Schritte umfaßt:
- Erfassen von Ist-Werten der Fahrzeugbewegung, insbesondere Querbeschleunigung, Längsbeschleunigung und Drehrate um die Hochachse des Fahrzeugs,
- Bestimmen des dem gewünschten Fahrverhalten des Kraftfahrzeugs entsprechenden Soll-Zustands der Fahrzeugbewegung, insbesondere im Rahmen einer elektronischen Regelung der Fahrdynamik,
- Vergleichen eines aus mindestens einem Teil der erfaßten Ist-Werte bestimmten Ist-Zustandes der Fahrzeugbewegung mit dem Soll-Zustand der Fahrzeugbewegung, insbesondere im Rahmen einer elektronischen Regelung der Fahrdynamik,
- Parametrierung eines Auslösealgorithmus, der zur Generierung von Auslösesignalen eingesetzt wird, wobei Parameter des Auslösealgorithmus unter Berücksichtigen von Abweichungen zwischen Ist-Zustand und Soll-Zustand der Fahrzeugbewegung eingestellt werden, und
- Anwenden des Auslösealgorithmus auf mindestens einen Teil der erfaßten Ist-Werte zum bedarfsweisen Erzeugen von situationsangepaßten Auslösesignalen für die Auslösung mindestens eines der Rückhaltemittel.

Zum anderen wird die Aufgabe für eine Anordnung zur Auslösesteuerung von Rückhaltemitteln für Fahrzeuginsassen in einem Kraftfahrzeug gelöst, die Sensoren zur Erfassung von Ist-Werten der Fahrzeugbewegung, insbesondere Querbeschleunigung, Längsbeschleunigung und Drehrate um die Hochachse des Fahrzeugs, umfaßt, sowie eine Rückhaltemittelsteuereinheit, die geeignet ist, in Abhängigkeit der erfaßten Ist-Werte Auslösesignale zur Auslösung der Rückhaltemittel zu generieren und an die Rückhaltemittel auszugeben, indem Mittel vorgesehen werden zur Bestimmung des dem gewünschten Fahrverhalten des Kraftfahrzeugs entsprechenden Soll-Zustands der Fahrzeugbewegung, im Rahmen einer elektronischen Regelung der Fahrdynamik, die eingesetzt wird, um durch gezielten Eingriff auf Bremsen und Motormanagement ein mögliches Schleudern des Fahrzeuges zu verhindern, wobei die Rückhaltemittelsteuereinheit geeignet ist, zusätzlich zu den erfaßten Ist-Werten den Soll-Zustand der Fahrzeugbewegung bei der Generierung der Auslösesignale zu berücksichtigen, indem Parameter eines Auslösealgorithmus unter Berücksichtigung von Abweichungen zwischen Ist-Zustand und Soll-Zustand der Fahrzeugbewegung eingestellt werden.

Der Vorteil des erfindungsgemäßen Verfahrens und der erfindungsgemäßen Anordnung besteht darin, daß mit der vorgesehenen Ermittlung des Soll-Zustands der Fahrzeugbewegung Informationen vorhanden sind, die es erlauben, die Generierung der Auslösesignale in Bezug auf die Fahrdynamik an die jeweilige Situation anzupassen. So kann durch entsprechende Einstellung der Parameter der Auslösealgorithmus in fahrdynamisch kritischen Situationen empfindlicher geschaltet werden, als in fahrdynamisch weniger kritischen Situationen. Es kann also für kritische Situationen ein schnelleres Ansprechverhalten der Auslösung der Rückhaltemittel erzielt werden, ohne daß gleichzeitig ein vorschnelles oder überzogenes Auslösen riskiert wird. Der Entscheidungsalgorithmus zur Auslösung der Rückhaltemittel läßt sich somit wesentlich sicherer gestalten.

Ist in einem Fahrzeug die Integration eines System zur elektronischen Regelung der Fahrdynamik zur Unterstützung des Fahrers in Situationen mit kritischem Fahrverhalten des Fahrzeugs vorgesehen, so machen sich das erfindungsgemäße Verfahren und die erfindungsgemäßen Anordnung in einer besonders vorteilhaften Ausgestaltung die Sensoren und Auswertungsalgorithmen dieses Systems zunutze. Der Rückhaltemittelsteuereinheit können dann ohne wesentlichen zusätzlichen Aufwand die bereits von dem System zur Regelung der Fahrdynamik ausgewertete Informationen bezüglich der Abweichung zwischen auszugeben, indem Mittel vorgesehen werden zur Bestimmung des dem gewünschten Fahrverhalten des Kraftfahrzeugs entsprechenden Soll-Zustands der Fahrzeugbewegung, wobei die Rückhaltemittelsteuereinheit geeignet ist, zusätzlich zu den erfaßten Ist-Werten den Soll-Zustand der Fahrzeugbewegung und Informationen über den Abstand des Fahrzeugs zu Objekten der Umgebung, wie beispielsweise zu anderen Fahrzeugen bei der Generierung der Auslösesignale zu berücksichtigen.

Der Vorteil des erfindungsgemäßen Verfahrens und der erfindungsgemäßen Anordnung besteht darin, daß mit der vorgesehenen Ermittlung des Soll-Zustands der Fahrzeugbewegung Informationen vorhanden sind, die es erlauben, die Generierung der Auslösesignale in Bezug auf die Fahrdynamik an die jeweilige Situation anzupassen. So kann durch entsprechende Einstellung der Parameter der Auslösealgorithmus in fahrdynamisch kritischen Situationen empfindlicher geschaltet werden, als in fahrdynamisch weniger kritischen Situationen. Es kann also für kritische Situationen ein schnelleres Ansprechverhalten der Auslösung der Rückhaltemittel erzielt werden, ohne das gleichzeitig ein vorschnelles oder überzogenes Auslösen riskiert wird. Der Entscheidungsalgorithmus zur Auslösung der Rückhaltemittel läßt sich somit wesentlich sicherer gestalten.

Ist in einem Fahrzeug die Integration eines System zur elektronischen Regelung der Fahrdynamik zur Unterstützung des Fahrers in Situationen mit kritischem Fahrverhalten des Fahrzeugs vorgesehen, so machen sich das erfindungsgemäße Verfahren und die erfindungsgemäßen Anordnung in einer besonders vorteilhaften Ausgestaltung die Sensoren und Auswertungsalgorithmen dieses Systems zunutze. Der Rückhaltemittelsteuereinheit können dann ohne wesentlichen zusätzlichen Aufwand die bereits von dem System zur Regelung der Fahrdynamik ausgewertete Informationen bezüglich der Abweichung zwischen Ist- und Soll-Zustand des Fahrverhaltens zugänglich gemacht werden, um diese in die Parametrierung des Auslösealgorithmus mit einbeziehen zu können.

Falls vorhanden, wird vorteilhafterweise auf ein Steuergerät zur automatischen Abstandsregelung und die dazugehörige Sensorik zurückgegriffen.

Ebenso können andere in einem Fahrzeug integrierte und Abweichungen zwischen gewünschtem und tatsächlichem Zustand des Fahrzeugs ermittelnde Steuereinheiten neben ihrer eigentlichen Aufgabe genutzt werden, um der Rückhaltemittelsteuereinheit zusätzliche Informationen zu liefern, die dann für eine optimale Parametrierung des Auslösealgorithmus berücksichtigt werden können.

In einer weiteren bevorzugten Ausgestaltung der erfindungsgemäßen Anordnung und des erfindungsgemäßen Verfahrens ist zumindest ein Teil der Rückhaltemittel in mindestens zwei Stufen aktivierbar. In Abhängigkeit von den erfaßten Ist-Werten und dem ermittelten Sollzustand des Fahrverhaltens oder anderer der Rückhaltemittelsteuereinheit zur Verfügung gestellten Informationen kann dann die Auslösung der einzelnen Stufen einzelner Rückhaltemittel differenziert erfolgen. Zum Beispiel kann ein Airbag in fahrdynamisch kritischen Situationen härter ausgelöst werden, als in fahrdynamisch weniger kritischen Situationen mit identischen erfaßten Ist-Werten der Fahrzeugbewegung, wie den Längs- oder Querbeschleunigungswerten. Auf diese Weise wird ein besonders gut auf die jeweilige Situation zugeschnittener und damit auch besonders effektiver Schutz ermöglicht.

Weitere vorteilhafte Ausgestaltungen des Verfahrens und der Anordnung gemäß der Erfindung gehen aus den Unteransprüchen hervor.

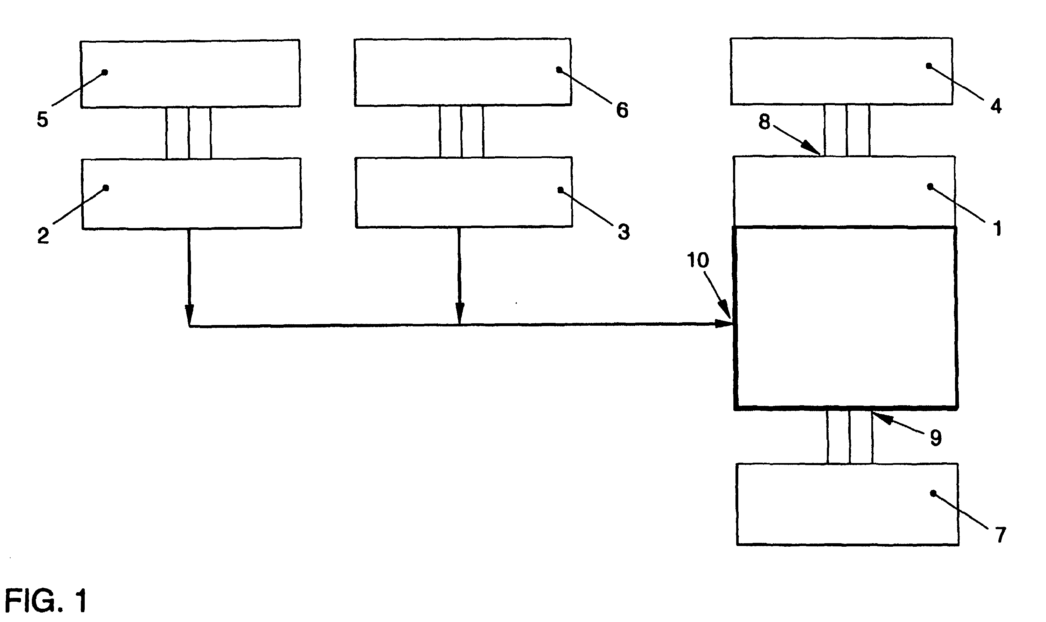

Das erfindungsgemäße Verfahren und die erfindungsgemäße Anordnung werden im folgenden anhand eines Ausführungsbeispiels unter Bezugnahme auf eine Zeichnung näher erläutert. Dabei zeigt die einzige Figur zur Veranschaulichung einer möglichen Ausgestaltung einer erfindungsgemäßen Anordnung ein Übersichtsdiagramm zu dem Zusammenwirken einer Rückhaltemittelsteuereinheit 1 mit einem Steuergerät 2 für eine elektronische Regelung der Fahrdynamik und einem Steuergerät 3 zur automatischen Abstandsregelung.

Die dargestellte Rückhaltemittelsteuereinheit 1 weist einen Mikroprozessor auf und ist über Eingänge 8 mit den Ausgängen einer Crash-Sensorik 4 verbunden. Über ihre Ausgänge 9 hat die Rückhaltemittelsteuereinheit 1 individuellen Zugang zu sämtlichen ansteuerbaren Rückhaltemitteln 7 des Fahrzeugs, von denen zumindest ein Teil mehrstufig ansteuerbare Airbags sind.

Über weitere Eingänge bzw. über eine Busschnittstelle 10 ist die Rückhaltemittelsteuereinheit 1 mit einem Ausgang des Steuergeräts 2 zur elektronischen Regelung der Fahrdynamik und mit einem Ausgang eines Steuergeräts 3 für eine automatische Abstandsregelung verbunden. Das Steuergerät 2 für die elektronische Regelung der Fahrdynamik hat seinerseits Verbindung zu einer Sensorik 5 für die Fahrdynamik und das Steuergerät 3 zur automatischen Abstandsregelung zu einer speziell hierfür vorgesehenen Sensorik 6.

Die Rückhaltemittelsteuereinheit 1 und ihre Verbindung zu der Crash-Sensorik 4 und den Rückhaltemitteln 7 entspricht zunächst den aus dem Stand der Technik bekannten Rückhaltemittelsteuereinheiten.

Von der Crash-Sensorik 4 erhält die Rückhaltemittelsteuereinheit 1 Ist-Werte, die über einen in dem Mikroprozessor der Rückhaltemittelsteuereinheit 1 gespeicherten Auslösealgorithmus abgearbeitet werden. Je nach dem, ob und welche Auslösekriterien bei der Abarbeitung des Auslösealgorithmus erfüllt werden, wird eine bestimmte Unfallsituation erkannt und es werden dieser zugeordnete Auslösesignale von der Rückhaltemittelsteuereinheit an die Rückhaltemittel 7 ausgegeben. Es können beispielsweise je nach ausgegebenen Auslösesignalen nur einzelne Rückhaltemittel 7 ausgelöst werden, oder verschiedene nacheinander, ebenso einzelne mehrstufig auslösbare Rückhaltemittel nur in einer bestimmten Stufe oder in mehreren Stufen hintereinander.

Der entscheidende Unterschied zu den bekannten Rückhaltemittelsteuereinheiten besteht in der zusätzlichen Verbindung der Rückhaltemittelsteuereinheit 1 mit dem Steuergerät 2 für die elektronische Regelung der Fahrdynamik und dem Steuergerät 3 zur automatischen Abstandsregelung.

Systeme zur elektronischen Regelung der Fahrdynamik werden eingesetzt, um durch gezielten Eingriff auf Bremsen und Motormanagement ein mögliches Schleudern des Fahrzeuges zu verhindern.

Zu diesem Zweck werden von Sensoren 5 zum einen Ist-Werte der Fahrzeugbewegung erfaßt und zum anderen Werte, die Aufschluß über das gewünschte Fahrverhalten des Fahrzeug liefern. In dem Steuergerät 2 zur elektronischen Regelung der Fahrdynamik werden daraus der Ist- und der Soll-Zustand des Fahrzeugs errechnet und anschließend die sich ergebenden Zustände miteinander verglichen.

Als Werte, die der Bestimmung des Soll-Zustandes dienen sollen, werden dabei geeigneterweise die Radgeschwindigkeiten der einzelnen Räder von zugeordneten Drehzahlfühlern und die Stellung des Lenkrads durch einen Lenkradwinkelsensor geliefert. Ein Querbeschleunigungssensor, der ein seitliches Ausbrechen des Fahrzeugs meldet, und ein Drehratensensor, der eine Schleudertendenz anzeigt, stellen die Ist-Werte für die Bestimmung des Ist-Zustands zur Verfügung. Zusätzlich können die auf das Fahrzeug einwirkenden Längskräfte direkt über einen Längsbeschleunigungssensor oder indirekt durch Berechnung aus gemessenen Werten eines Bremsdrucksensors erfaßt und in die Berechnung des Ist-Zustands mit einbezogen werden.

Weichen die errechneten Ist- und Soll-Zustände voneinander ab, so wird gemäß der eigentlichen Aufgabe der elektronischen Regelung der Fahrdynamik ein Regeleingriff berechnet und durchgeführt, um den Fahrzustand zu stabilisieren.

Erfindungsgemäß liefert das Steuergerät 2 zur elektronischen Regelung der Fahrdynamik zusätzlich zu seiner eigentlichen Aufgabe der Rückhaltemittelsteuereinheit 1 Informationen über Abweichungen zwischen Soll- und Ist-Zustand der Fahrzeugbewegung und damit eine Vorabinformation für optimale Kriterien für eine Airbagauslösung. Die Parameter des Auslösealgorithmus werden nun in der Rückhaltemittelsteuereinheit 1 unter Berücksichtigung der Information des Steuergeräts 2 zur elektronischen Regelung der Fahrdynamik eingestellt.

Die Auswertung der von der Crash-Sensorik 4 gelieferten Ist-Werte der Fahrzeugbewegung wird somit mit einem fortlaufen aktualisierten Auslösealgorithmus durchgeführt, so daß der Vorgang der Erkennung einer Unfallsituation und vor allem auch deren Tragweite unter Berücksichtigung des gegenwärtigen Fahrzustandes erfolgt und entsprechende Auslösesignale an die Rückhaltemittel 7 ausgegeben werden.

Die Auslösung der Rückhaltemittel 7 erfolgt somit angepaßter und sicherer, als dies mit herkömmlichen Verfahren oder Anordnungen zur Auslösung von Rückhaltemitteln möglich ist. Das kann sich einerseits in der Empfindlichkeit der Auslösung niederschlagen, andererseits kann bei fahrdynamisch kritischen Situationen beispielsweise ein Airbag härter ausgelöst werden als bei fahrdynamisch weniger kritischen Situationen.

Das Steuergerät 3 zur automatischen Abstandsregelung dient ebenso wie das Steuergerät 2 zur elektronischen Regelung der Fahrdynamik primär der Unterstützung des Fahrers bei der Fahrzeugbedienung, hier in Hinblick auf den Abstand des Fahrzeugs zu Objekten der Umgebung. Für diese Regelung werden wiederum ein Ist- und ein Soll-Zustand ermittelt und miteinander verglichen.

Aber auch die Steuereinheit 3 zur automatischen Abstandsregelung kann der Rückhaltemittelsteuereinheit 1 erfindungsgemäß zusätzlich zu ihrer eigentlichen Aufgabe Informationen über den aktuellen Fahrzustand und damit eine Vorabinformation für die Einstellung der Parameter des Airbagauslösealgorithmus liefern. Die Auswertung der Ist-Werte für eine Generierung von Auslösesignalen kann somit noch weiter verfeinert werden, und es ergibt sich eine Verstärkung der bereits zu den durch die Steuereinheit 2 zur elektronischen Regelung der Fahrdynamik gelieferten Informationen aufgeführten Vorteile.

Es versteht sich von selbst, daß bei Übereinstimmung von Meßgrößen, die durch die Crashsensorik erfaßt werden, und von Meßgrößen, die durch die Sensorik für die Fahrdynamik erfaßt werden, diese Größen nur im Rahmen einer Sensorik für eine gemeinsame Nutzung erfaßt werden brauchen und daß entsprechend Sensoren eingespart werden können.

## Patentansprüche

1. Verfahren zur Auslösesteuerung von Rückhaltemitteln (7) für Fahrzeuginsassen in einem Kraftfahrzeug,
das die folgenden Schritte umfaßt:
Erfassen von Ist-Werten der Fahrzeugbewegung, insbesondere Querbeschleunigung, Längsbeschleunigung und Drehrate um die Hochachse des Fahrzeugs,
Bestimmen des dem gewünschten Fahrverhalten des Kraftfahrzeugs entsprechenden Soll-Zustands der Fahrzeugbewegung, im Rahmen einer elektronischen Regelung der Fahrdynamik, die eingesetzt wird, um durch gezielten Eingriff auf Bremsen und Motormanagement ein mögliches Schleudern des Fahrzeuges zu verhindern,
Vergleichen eines aus mindestens einem Teil der erfaßten Ist-Werte bestimmten Ist-Zustandes der Fahrzeugbewegung mit dem Soll-Zustand der Fahrzeugbewegung, insbesondere im Rahmen einer elektronischen Regelung der Fahrdynamik,
Parametrierung eines Auslösealgorithmus, der zur Generierung von Auslösesignalen eingesetzt wird, wobei Parameter des Auslösealgorithmus unter Berücksichtigen von Abweichungen zwischen Ist-Zustand und Soll-Zustand der Fahrzeugbewegung eingestellt werden, und
Anwenden des Auslösealgorithmus auf mindestens einen Teil der erfaßten Ist-Werte zum bedarfsweisen Erzeugen von situationsangepaßten Auslösesignalen für die Auslösung mindestens eines der Rückhaltemittel (7).

2. Verfahren zur Auslösesteuerung von Rückhaltemitteln nach Anspruch 1,
**dadurch gekennzeichnet, daß**
als Ist-Werte für die Bestimmung des Ist-Zustands mindestens die Querbeschleunigung, die Längsbeschleunigung sowie die Drehrate um die Hochachse des Fahrzeugs direkt oder indirekt erfaßt werden, und für die Ermittlung des Soll-Zustands mindestens der Lenkwinkel sowie die Drehzahlen der einzelnen Räder direkt oder indirekt erfaßt werden.

3. Verfahren zur Auslösesteuerung von Rückhaltemitteln nach Anspruch 1 oder 2,
**gekennzeichnet durch**
die zusätzliche Berücksichtigung von generierten Signalen einer Abstandsregelung bei der Parametrierung des Auslösealgorithmus.

4. Verfahren zur Auslösesteuerung von Rückhaltemitteln nach einem der voranstehenden Ansprüche,
**dadurch gekennzeichnet, daß**
in einer durch eine ermittelte Abweichung zwischen Ist-Zustand und Soll-Zustand der Fahrzeugbewegung angezeigten kritischen Situationen über die Parametrierung des Auslösealgorithmus die Auslösung der Rückhaltemittel (7) empfindlicher geschaltet wird.

5. Verfahren zur Auslösesteuerung von Rückhaltemitteln nach einem der voranstehenden Ansprüche,
**dadurch gekennzeichnet, daß**
mindestens ein Teil der Rückhaltemittel (7) in Abhängigkeit von durch den Auslösealgorithmus generierten Auslösesignalen stufenweise ausgelöst werden kann.

6. Verfahren zur Auslösesteuerung von Rückhaltemitteln nach Anspruch 5,
**dadurch gekennzeichnet, daß**
bei Feststellung eines Schleuderns des Fahrzeugs durch eine elektronische Regelung der Fahrdynamik der Auslösealgorithmus so parametriert wird, daß ein als Rückhaltemittel (7) eingesetzter Airbag härter ausgelöst wird, als bei gleichen erfaßten Ist-Werten der Fahrzeugbewegung ohne Feststellung eines Schleuderns des Fahrzeugs.

7. Anordnung zur Auslösesteuerung von Rückhaltemitteln (7) für Fahrzeuginsassen in einem Kraftfahrzeug, die Sensoren (4,5,6) zur Erfassung von Ist-Werten der Fahrzeugbewegung, insbesondere Querbeschleunigung, Längsbeschleunigung und Drehrate um die Hochachse des Fahrzeugs, umfaßt, sowie eine Rückhaltemittelsteuereinheit (1), die geeignet ist, in Abhängigkeit der erfaßten Ist-Werte Auslösesignale zur Auslösung der Rückhaltemittel (7) zu generieren und an die Rückhaltemittel (7) auszugeben,
**gekennzeichnet durch**
Mittel (2) zur Bestimmung des dem gewünschten Fahrverhalten des Kraftfahrzeugs entsprechenden Soll-Zustands der Fahrzeugbewegung, im Rahmen einer elektronischen Regelung der Fahrdynamik, die eingesetzt wird, um **durch** gezielten Eingriff auf Bremsen und Motormanagement ein mögliches Schleudern des Fahrzeuges zu verhindern, wobei die Rückhaltemittelsteuereinheit (1) geeignet ist, zusätzlich zu den erfaßten Ist-Werten den Soll-Zustand der Fahrzeugbewegung bei der Generierung der Auslösesignale zu berücksichtigen,
indem Parameter eines Auslösealgorithmus unter Berücksichtigung von Abweichungen zwischen Ist-Zustand und Soll-Zustand der Fahrzeugbewegung eingestellt werden.

8. Anordnung zur Auslösesteuerung von Rückhaltemitteln (7) nach Anspruch 7,
**dadurch gekennzeichnet, daß**
mindestens ein Teil der Sensoren (5,6) zur Erfassung von Ist-Werten der Fahrzeugbewegung verbunden ist mit einer Auswerteeinheit (2), insbesondere einem Steuergerät für eine elektronische Regelung der Fahrdynamik,
die Auswerteeinheit (2) geeignet ist zum Vergleichen eines aus erfaßten Ist-Werten, insbesondere Querbeschleunigung, Bremsdruck und Drehrate um die Hochachse des Fahrzeugs, bestimmten Ist-Zustands der Fahrzeugbewegung mit einem aus von weiteren Sensoren (5) erfaßten und an die Auswerteeinheit (2) übermittelten Werten, insbesondere Lenkwinkel und Drehzahl der Räder, bestimmten Soll-Zustand, und
ein Ausgang der Auswerteeinheit (2,3) mit einem Eingang (10) der Rückhaltemittelsteuereinheit (1) verbunden ist zum Übermitteln von Informationen über Abweichungen zwischen Ist-Zustand und Soll-Zustand von der Auswerteeinheit (2,3) zu der Rückhaltemittelsteuereinheit (1).

9. Anordnung zur Auslösesteuerung von Rückhaltemitteln (7) nach Anspruch 7 oder 8,
**gekennzeichnet durch**
Sensoren (6) zur Abstandsbestimmung, wobei die Rückhaltemittelsteuereinheit (1) geeignet ist, bei der Generierung der Auslösesignale aktuelle Abstands-Informationen, ermittelt aus den von den Sensoren (6) zur Abstandsbestimmung erfaßten Werten, zusätzlich zu den erfaßten Ist-Werten und dem aktuellen Soll-Zustand der Fahrzeugbewegung zu berücksichtigen.

10. Anordnung zur Auslösesteuerung von Rückhaltemitteln (7) nach Anspruch 9,
**dadurch gekennzeichnet, daß**
die Sensoren (6) zur Abstandsbestimmung mit einem Abstandsregelungs-Steuergerät (3) zur Auswertung der von den Sensoren (6) zur Abstandsbestimmung erfaßten Werten verbunden sind, wobei ein Ausgang des Abstandsregelungs-Steuergeräts (3) mit einem Eingang (10) der Rückhaltemittelsteuereinheit (1) verbunden ist zum Übermitteln der aktuellen Abstand-Informationen.

11. Anordnung zur Auslösesteuerung von Rückhaltemitteln (7) nach Anspruch 7 bis 10,
**dadurch gekennzeichnet, daß**
mindestens ein Teil der Rückhaltemittel (7) mindestens zwei über die von der Rückhaltemittelsteuereinheit (1) ausgebbaren Auslösesignale nacheinander und/oder einzeln aktivierbare Stufen aufweist.

12. Anordnung zur Auslösesteuerung von Rückhaltemitteln (7) nach einem der Ansprüche 7 bis 11,
**dadurch gekennzeichnet, daß**
die Rückhaltemittel (7) mindestens einen Airbag umfassen.

## Claims

1. Method for controlling the triggering of restraint means (7) for vehicle occupants in a motor vehicle, which comprises the following steps:
actual values of the movement of the vehicle, in particular lateral acceleration, longitudinal acceleration and rotational speed about the vertical axis of the vehicle are sensed,
the setpoint state of the movement of the vehicle which corresponds to the desired driving behaviour of the motor vehicle is determined, within the scope of an electronic control process of the vehicle movement dynamics which is used in order to prevent possible skidding of the vehicle by means of selective intervention in brakes and the engine management,
an actual state of the movement of the vehicle which is determined from at least some of the sensed actual values is compared with the setpoint state of the movement of the vehicle, in particular within the scope of an electronic control of the vehicle movement dynamics,
a triggering algorithm, which is used to generate triggering signals, is parameterized, parameters of the triggering algorithm being set taking into account deviations between the actual state and the setpoint state of the movement of the vehicle, and
the triggering algorithm is applied to at least some of the sensed actual values in order to generate, according to requirements, triggering signals which are adapted to situations, in order to trigger at least one of the restraint means (7).

2. Method for controlling the triggering of restraint means according to Claim 1, **characterized in that** at least the lateral acceleration, the longitudinal acceleration and the rotational speed about the vertical axis of the vehicle are sensed directly or indirectly as actual values for determining the actual state, and at least the steering angle and the rotational speeds of the individual wheels are sensed directly or indirectly in order to determine the setpoint state.

3. Method for controlling the triggering of restraint means according to Claim 1 or 2, **characterized in that** signals generated by an inter-vehicle distance control system are additionally taken into account in the parameterization of the triggering algorithm.

4. Method for controlling the triggering of restraint means according to one of the preceding claims, **characterized in that** the triggering of the restraint means (7) is switched to a more sensitive state, by the parameterization of the triggering algorithm, in critical situations which are indicated by a determined deviation between the actual state and setpoint state of the movement of the vehicle.

5. Method for controlling the triggering of restraint means according to one of the preceding claims, **characterized in that** at least some of the restraint means (7) can be triggered incrementally as a function of triggering signals which are generated by the triggering algorithm.

6. Method for controlling the triggering of restraint means according to Claim 5, **characterized in that**, when skidding of the vehicle is detected, the triggering algorithm is parameterized by electronically controlling the vehicle movement dynamics, in such a way that an airbag which is used as restraint means (7) is triggered in a harder way than in the case of identical sensed actual values of the movement of the vehicle when skidding of the vehicle is not detected.

7. Arrangement for controlling the triggering of restraint means (7) for vehicle occupants in a motor vehicle, which comprises sensors (4, 5, 6) for sensing actual values of the movement of the vehicle, in particular lateral acceleration, longitudinal acceleration and rotational speed about the vertical axis of the vehicle, and a restraint means control unit (1) which is suitable for generating, as a function of the sensed actual values, triggering signals for triggering the restraint means (7) and outputting them to the restraint means (7), **characterized by** means (2) for determining the setpoint state of the movement of the vehicle which corresponds to the desired driving behaviour of the motor vehicle, within the scope of an electronic control process of the vehicle movement dynamics which is used in order to prevent possible skidding of the vehicle by means of selective intervention in brakes and engine management, the restraint means control unit (1) being suitable for taking into account, in addition to the sensed actual values, the setpoint state of the movement of the vehicle in the generation of the triggering signals in that parameters of a triggering algorithm are set taking into account deviations between the actual state and setpoint state of the movement of the vehicle.

8. Arrangement for controlling the triggering of restraint means (7) according to Claim 7, **characterized in that** at least some of the sensors (5, 6) for sensing actual values of the movement of the vehicle are connected to an evaluation unit (2), in particular a control device for electronically controlling the vehicle movement dynamics, the evaluation unit (2) is suitable for comparing a specific actual state of the movement of the vehicle, determined from sensed actual values, in particular lateral acceleration, brake pressure and rotational speed about the vertical axis of the vehicle, with a specific setpoint state which is determined from values, in particular steering angle and rotational speed of the wheels, which are sensed by further sensors (5) and transmitted to the evaluation unit (2), and an output of the evaluation unit (2, 3) is connected to an input (10) of the restraint means control unit (1) in order to transmit information about deviations between the actual state and the setpoint state from the evaluation unit (2, 3) to the restraint means control unit (1).

9. Arrangement for controlling the triggering of restraint means (7) according to Claim 7 or 8, **characterized by** sensors (6) for determining distance, the restraint means control unit (1) being suitable for taking into account, in the generation of the triggering signals, current distance information, determined from values which are sensed by the sensors (6) for determining distance, in addition to the sensed actual values and the current setpoint state of the movement of the vehicle.

10. Arrangement for controlling the triggering of restraint means (7) according to Claim 9, **characterized in that** the sensors (6) for determining distance are connected to an inter-vehicle distance control device (3) for evaluating the values which are sensed by the sensors (6) for determining distance, an output of the inter-vehicle distance control device (3) being connected to an input (10) of the restraint means control unit (1) in order to transmit the current distance information.

11. Arrangement for controlling the triggering of restraint means (7) according to Claims 7 to 10, **characterized in that** at least some of the restraint means (7), at least two, have stages which can be activated successively and/or individually by means of the triggering signals which can be output by the restraint means control unit (1).

12. Arrangement for controlling the triggering of restraint means (7) according to one of Claims 7 to 11, **characterized in that** the restraint means (7) comprise at least one airbag.

## Revendications

1. Procédé pour la commande du déclenchement de moyens de retenue (7) pour les occupants d'un véhicule automobile, qui comprend les étapes qui consistent à:
déterminer les valeurs effectives du déplacement du véhicule, en particulier l'accélération transversale, l'accélération longitudinale et la vitesse de rotation du véhicule autour de son axe vertical,
déterminer l'état de consigne qui correspond au comportement de roulage souhaité du véhicule dans le cadre d'une régulation électronique de la dynamique de roulage que l'on utilise pour éviter un éventuel dérapage du véhicule au moyen d'une action contrôlée sur les freins et sur la gestion du moteur,
comparer un état effectif déterminé sur la base d'au moins une partie des valeurs effectives saisies du déplacement du véhicule à l'état de consigne du déplacement du véhicule, en particulier dans le cadre d'une régulation électronique de la dynamique de roulage,
paramétrer un algorithme de déclenchement utilisé pour créer des signaux de déclenchement, les paramètres de l'algorithme de déclenchement étant réglés en tenant compte des différences entre l'état effectif et l'état de consigne de déplacement du véhicule et
appliquer l'algorithme de déclenchement sur au moins une partie des valeurs effectives saisies pour délivrer selon les besoins des signaux de déclenchement adaptés à la situation pour déclencher au moins l'un des moyens de retenue (7).

2. Procédé de commande du déclenchement de moyens de retenue selon la revendication 1, **caractérisé en ce que** comme valeurs effectives pour la détermination de l'état effectif, on saisit directement ou indirectement au moins l'accélération transversale, l'accélération longitudinale et le taux de rotation du véhicule autour de son axe vertical et, pour obtenir l'état de consigne, on saisit directement ou indirectement au moins l'angle de braquage et la vitesse de rotation de chacune des roues.

3. Procédé pour la commande du déclenchement de moyens de retenue selon la revendication 1 ou la revendication 2, **caractérisé en ce que** lors du paramétrage de l'algorithme de déclenchement, on tient compte en outre des signaux créés par une régulation de la distance entre les véhicules.

4. Procédé pour la commande du déclenchement de moyens de retenue selon l'une des revendications précédentes, **caractérisé en ce qu'**à l'aide du paramétrage de l'algorithme de déclenchement, le déclenchement des moyens de retenue (7) est rendu plus sensible lors d'une situation critique signalée par la saisie d'une différence entre l'état effectif et l'état de consigne du déplacement du véhicule.

5. Procédé pour la commande du déclenchement de moyens de retenue selon l'une des revendications précédentes, **caractérisé en ce qu'**au moins une partie des moyens de retenue (7) peut être déclenchée progressivement en fonction de signaux de déclenchement créés au moyen de l'algorithme de déclenchement.

6. Procédé pour la commande du déclenchement de moyens de retenue selon la revendication 5, **caractérisé en ce que** l'algorithme de déclenchement est paramétré de telle manière qu'un coussin gonflable de sécurité utilisé comme moyen de retenue (7) est déclenché avec plus de fermeté dans le cas où une régulation électronique de la dynamique de roulage constate un dérapage du véhicule que dans le cas de mêmes valeurs effectives saisies de déplacement du véhicule sans constatation que le véhicule est en dérapage.

7. Agencement pour la commande du déclenchement de moyens de retenue (7) pour les occupants d'un véhicule automobile, qui comprend des détecteurs (4, 5, 6) pour saisir les valeurs effectives du déplacement du véhicule, en particulier l'accélération transversale, l'accélération longitudinale et le taux de rotation du véhicule autour de son axe vertical ainsi qu'une unité de commande (1) des moyens de retenue qui convient pour créer des signaux de déclenchement en vue du déclenchement des moyens de retenue (7) en fonction des valeurs effectives saisies et pour transmettre ces signaux aux moyens de retenue (7), **caractérisé par** des moyens (2) pour déterminer l'état de consigne de déplacement du véhicule qui correspond au comportement de roulage souhaité de ce dernier dans le cadre d'une régulation électronique de la dynamique de roulage que l'on utilise pour éviter un éventuel dérapage du véhicule au moyen d'une action contrôlée sur les freins et sur la gestion du moteur, l'unité de commande (1) des moyens de retenue convenant pour, lors de la création des signaux de déclenchement, prendre en compte l'état de consigne du déplacement du véhicule en plus des valeurs effectives saisies, des paramètres d'un algorithme de déclenchement étant réglés en tenant compte des différences entre l'état de consigne et l'état effectif du déplacement du véhicule.

8. Agencement pour la commande du déclenchement de moyens de retenue (7) selon la revendication 7, **caractérisé en ce qu'**au moins une partie des détecteurs (5, 6) pour la saisie des valeurs effectives du déplacement du véhicule est reliée à une unité d'évaluation (2), en particulier à un appareil de commande d'une régulation électronique de la dynamique de roulage,
**en ce que** l'unité d'évaluation (2) convient pour effectuer une comparaison entre un état effectif du déplacement du véhicule déterminé sur la base de valeurs effectives saisies, en particulier de l'accélération transversale, de la pression de freinage et du taux de rotation du véhicule autour de son axe vertical, d'une part, et un état de consigne déterminé sur la base de valeurs saisies par d'autres détecteurs (5) et transmises à l'unité d'évaluation (2), en particulier de l'angle de braquage et de la vitesse de rotation des roues
et **en ce qu'**une sortie de l'unité d'évaluation (2, 3) est reliée à une entrée (10) de l'unité de commande (1) des moyens de retenue pour que l'unité d'évaluation (2, 3) transmette à l'unité de commande (1) des moyens de retenue les informations relatives aux différences entre l'état effectif et l'état de consigne.

9. Agencement pour la commande du déclenchement de moyens de retenue (7) selon la revendication 7 ou la revendication 8, **caractérisé par** des détecteurs (6) pour déterminer la distance entre les véhicules, l'unité de commande (1) des moyens de retenue convenant pour, en plus des valeurs effectives saisies et de l'état de consigne actuel du déplacement du véhicule, prendre en compte, lors de la création des signaux de déclenchement, des informations actuelles relatives à la distance entre les véhicules obtenues sur la base des valeurs saisies par les détecteurs (6) qui servent à déterminer la distance entre les véhicules.

10. Agencement pour la commande du déclenchement de moyens de retenue (7) selon la revendication 9, **caractérisé en ce que** les détecteurs (6) qui servent à déterminer la distance entre les véhicules sont reliés à un appareil de commande (3) de la régulation de la distance entre les véhicules pour évaluer les valeurs saisies par les détecteurs (6) qui servent à déterminer la distance entre les véhicules, une sortie de l'appareil de commande (3) de la régulation de la distance entre les véhicules étant reliée à une entrée (10) de l'unité de commande (1) des moyens de retenue pour transmettre les informations actuelles de distance.

11. Agencement pour la commande du déclenchement de moyens de retenue (7) selon les revendications 7 à 10, **caractérisé en ce qu'**au moins une partie des moyens de retenue (7) présente au moins deux niveaux aptes à être activés successivement et/ou séparément au moyen des signaux de déclenchement pouvant être délivrés par l'unité de commande (1) des moyens de retenue.

12. Agencement pour la commande du déclenchement de moyens de retenue (7) selon l'une des revendications 7 à 11, **caractérisé en ce que** les moyens de retenue (7) comprennent au moins un coussin gonflable de sécurité.
